(19) Europäisches Patentamt / European Patent Office / Office européen des brevets

(11) **EP 1 636 920 B1**

(12) **EUROPÄISCHE PATENTSCHRIFT**

(45) Veröffentlichungstag und Bekanntmachung des Hinweises auf die Patenterteilung:
**21.09.2011 Patentblatt 2011/38**

(21) Anmeldenummer: **04730274.0**

(22) Anmeldetag: **29.04.2004**

(51) Int Cl.:
**H04B 7/06** $^{(2006.01)}$     **H04B 7/02** $^{(2006.01)}$

(86) Internationale Anmeldenummer:
**PCT/EP2004/050652**

(87) Internationale Veröffentlichungsnummer:
**WO 2004/114545 (29.12.2004 Gazette 2004/53)**

(54) **VERFAHREN ZUR ERMITTLUNG EINES ANTENNENGEWICHTUNGSFAKTORS**

METHOD FOR THE DETERMINATION OF AN ANTENNA WEIGHTING FACTOR

PROCEDE POUR DETERMINER UN FACTEUR DE PONDERATION D'ANTENNE

(84) Benannte Vertragsstaaten:
**AT BE BG CH CY CZ DE DK EE ES FI FR GB GR HU IE IT LI LU MC NL PL PT RO SE SI SK TR**

(30) Priorität: **20.06.2003 DE 10327896**

(43) Veröffentlichungstag der Anmeldung:
**22.03.2006 Patentblatt 2006/12**

(73) Patentinhaber: **SIEMENS AKTIENGESELLSCHAFT**
**80333 München (DE)**

(72) Erfinder:
• **BURKERT, Frank**
**81245 München (DE)**
• **GERLACH, Heino**
**81675 München (DE)**

(56) Entgegenhaltungen:
**DE-A- 10 124 397     DE-A- 10 141 392**
**US-B1- 6 345 075**

• **SAMSUNG AND SEOUL NATIONAL UNIVERSITY:
"Preliminary Version of Algorithm and Simulation Results for Tx Diversity with more than 2 Tx Antennas" TSG-RAN WORKING GROUP 1 MEETING 4, 4. Juli 2000 (2000-07-04), XP002197993**

EP 1 636 920 B1

**Beschreibung**

Die Erfindung betrifft ein Verfahren zur Ermittlung eines Antennengewichtungsfaktors für eine Einstellung einer Antennengewichtung in Basisstationen eines zellularen Funknetzes, in welchem eine Funkverbindung zwischen einem mobilen Endgerät und dem Netz gleichzeitig über mehrere Basisstationen bestehen kann, die jeweils parallel über mehrere Übertragungspfade von unterschiedlichen Antennen aus an das Endgerät senden, wobei das Endgerät für die zugeordneten Basisstationen jeweils Kanalkoeffizienten für die Übertragungspfade von den Antennen der betreffenden Basisstation zu dem Endgerät ermittelt und anhand der einzelnen Kanalkoeffizienten einen Antennengewichtungsfaktor bestimmt und diesen an die Basisstation übermittelt. Darüber hinaus betrifft die Erfindung ein Verfahren zum Betrieb eines zellularen Funknetzes, bei dem eine Ermittlung der Antennengewichtungsfaktoren nach einem solchen Verfahren erfolgt, sowie ein mobiles Endgerät zur Verwendung in einem solchen Verfahren.

In modernen Mobilfunksystemen, beispielsweise Mobilfunksystemen der sogenannten 3. Generation wie UMTS-Netzen, sind die Basisstationen in der Lage, über mehrere Sendeantennen - bei den derzeitigen UMTS-Spezifikationen mit zwei Sendeantennen - gleichzeitig zu senden. Der Vorteil dieses als Sendediversitätsverfahren (Transmit Diversity) genannten Verfahrens besteht darin, dass die zu übermittelnden Signale parallel über unterschiedliche Übertragungspfade transportiert werden, wobei sich die Wahrscheinlichkeit erhöht, dass zumindest über einen Pfad die Nachricht fehlerfrei am mobilen Endgerät eintrifft. Dadurch wird die Verbindung des Übertragungskanals von der Basisstation zum mobilen Endgerät sicherer und Fehlerraten wie die zeitrahmenbezogene Fehlerrate bzw. die "Frame Error Rate" und die Bitfehlerrate bzw. "Bit Error Rate" reduziert. Eine solche Verbesserung der Qualität des Übertragungskanals führt unmittelbar zu einer Erhöhung der Zellkapazität des Systems, d. h. zu einer Erhöhung der Anzahl der möglichen Teilnehmer innerhalb einer Zelle.

Um die Leistung der Sendeantennen der Basisstation am Ort des Endgeräts maximieren zu können, sollten sich die über die verschiedenen Übertragungspfade übermittelten Signale am Empfangsort kohärent überlagern, damit eine positive Interferenz möglich ist. Eine solche Maximierung der Empfangsleistung ist dabei durch geeignete Einstellung der Antennengewichtung durch die Basisstation gemäß einem vorgegebenen optimalen Antennengewichtungsfaktor (Antenna Weight) möglich. Dieser Antennengewichtungsfaktor gibt zum einen ein Phasen-Offset zwischen den verschiedenen Antennen vor, welches der relativen Phase zwischen den von den verschiedenen Antennen ausgesendeten Signalen entspricht. Bei bestimmten Übertragungsverfahren, beispielsweise im Mode 2 - Verfahren innerhalb eines UMTS-Netzes, kann zusätzlich der Antennengewichtungsfaktor auch einen sog. Power-Offset vorgeben, durch den festgelegt wird, in welcher Weise die Sendeleistung unter den verschiedenen Antennen aufgeteilt wird.

Da die Empfangsleistung am Endgerät letztlich nur vom Endgerät selber festgestellt werden kann, schätzt das Endgerät beispielsweise beim sog. Übertragungsdiversitätsverfahren mit Regelkreis bzw. "Closed Loop Transmit Diversity"-Verfahren der 3 GPP UMTS-Spezifikationen anhand von Kontrollsignalen, welche von den Basisstationen ausgesendet werden, die sog. Kanalimpulsantwort des betreffenden Kanals von der Basisstation zum Endgerät ab. Die Kanalimpulsantwort des Kanals von der Basisstation zum Endgerät (auch Abwärts- bzw. "Downlink"-Kanal genannt) besteht hierbei aus komplexen Kanalkoeffizienten für die einzelnen Übertragungspfade von den verschiedenen Antennen der Basisstation zum Endgerät. Die Begriffe "Kanalimpulsantwort" und "Kanalkoeffizienten" werden daher im Folgenden auch synonym verwendet. Bei dem Kontrollsignal handelt es sich um ein dem Endgerät bekanntes Signal. Beim UMTS-Netz wird hierzu der sog. gemeinsam, d.h. von mehreren mobilen Endgeräten bzw. Terminals benutzten, Pilotkanal bzw. "Common Pilot Channel" CPICH genutzt. Mit Hilfe der Kanalkoeffizienten wird dann im Endgerät der optimale Antennengewichtungsfaktor bestimmt.

Der Antennengewichtungsfaktor kann dabei vom Endgerät durch eine Maximierung der Empfangsleistung P gemäß folgender Gleichung bestimmt werden.

$$\mathbf{P} = \underline{w}^{\mathrm{H}}\mathbf{H}^{\mathrm{H}}\mathbf{H}\underline{w} \qquad\qquad (1)$$

Hierbei sind der Antennengewichtungsfaktor $\underline{w}$ und die vom Endgerät geschätzte Kanalimpulsantwort H Vektoren, deren Elemente die einzelnen Antennengewichtungsfaktoren für die verschiedenen Antennen bzw. die Kanalkoeffizienten der verschiedenen Übertragungspfade sind. H ist nur für den speziellen Fall, dass sich ein Signal von einer Basisstation auf nur einem Wege ausbreitet ein Vektor. Im allgemeinen Fall stellt H eine Matrix dar, wobei jede Spalte für die Ausbreitung über einen Weg steht. Dies hat jedoch auf die Gewichtungsvektoren selbst keinen Einfluss. Für eine Basisstation mit zwei Sendeantennen dargestellt, wie dies beim derzeitigen UMTS-Standard der Fall ist, gilt:

$$\underline{w} = \begin{bmatrix} w_a \\ w_b \end{bmatrix} \quad ; \quad H = \begin{bmatrix} h_a h_b \end{bmatrix} \qquad (2)$$

In diesem Beispiel sind $w_a$ und $w_b$ die einzelnen Gewichtungsfaktoren für die beiden Antennen der Basisstation und $h_a$ und $h_b$ die einzelnen Kanalkoeffizienten für die Übertragungspfade von den beiden Antennen zum Endgerät. Grundsätzlich ist aber auch eine entsprechende Erweiterung auf mehr als zwei Antennen möglich. In Gleichung (1) ist $w^H$ der konjugiert komplex transponierte Vektor von $\underline{w}$ und $H^H$ der konjugiert komplex transponierte Vektor bzw. die konjugiert komplexe Matrix von H.

Den auf diese Weise ermittelten, aus Sicht des Endgeräts optimalen Antennengewichtungsfaktor $\underline{w}$ übersendet das Endgerät dann über den üblichen Übertragungskanal, den sog. Uplink-Kanal, an die Basisstationen. Beim derzeitigen UMTS-Standard geschieht dies beispielsweise über den festzugeordneten physikalischen Aufwärtsverbindungskontroll-Kanal bzw. "Uplink-DPCCH (Dedicated Physical Control Channel)". Unter Aufwärtsverbindung bzw. "Uplink" wird die Verbindung vom Terminal oder Endgerät zur Basisstation verstanden. Das Signal, welches den Antennengewichtungsfaktor enthält, wird üblicherweise auch als Rückmeldungsnachricht bzw. "Feedback-Message" bezeichnet. Die Basisstation verwendet dann diesen vom Endgerät signalisierten Antennengewichtungsfaktor, um den Downlink-Kanal von der Basisstation zum Endgerät entsprechend einzustellen. Ein Nachteil bei den derzeitigen Mobilfunksystemen besteht darin, dass die Feedback-Message ohne zusätzlichen Fehlerschutz auf dem Uplink-Kanal vom Endgerät zur Basisstation gesendet wird, da jede Fehlerschutzmaßnahme, wie beispielsweise die Hinzufügung eines Paritätsbits oder die Übersendung von redundanten Daten, ein zusätzliches Datenaufkommen bedeuten würde. Daher muss für die Feedback-Message mit einer Bitfehlerrate (sog. "Feedback Error Rate") von einigen Prozent gerechnet werden. Derzeit wird eine Feedback Error Rate im Bereich von 4 bis 10 % als realistisch betrachtet. Sofern ein Fehler in der Feedback-Message auftritt, verwendet die Basisstation dann nicht den vom Endgerät berechneten Antennengewichtungsfaktor, sondern einen suboptimalen Antennengewichtungsfaktor. Dabei ist zu berücksichtigen, dass es sich z. B. bei der Feedback-Message in einer vorgesehenen Betriebsart Mode 1 des UMTS-Standards lediglich um zwei Bit handelt, mit denen der Basisstation eine von vier möglichen Antennengewichtungen mit unterschiedlichen Phasen-Offsets übermittelt wird. In einem weiteren Mode 2 handelt es sich um vier Bit, mit denen der Basisstation insgesamt eine von 16 Möglichkeiten der Antennengewichtung vorgegeben wird, wobei die ersten drei Bit den Phasen-Offset und das letzte Bit den Leistungs-bzw. "Power"-Offset enthält. Daher kann bereits ein einziges fehlerhaftes Bit dazu führen, dass der von der Basisstation empfangene Antennengewichtungsfaktor erheblich von dem vom Endgerät ermittelten Antennengewichtungsfaktor abweicht. Eher in den selteneren Fällen führt ein Bitfehler nur zu einer geringfügigen Abweichung des empfangenen Antennengewichtungsfaktors vom gesendeten Antennengewichtungsfaktor. Zwar kann das mobile Endgerät beim Empfang der von der Basisstation gesendeten Signale mit Hilfe eines noch später näher erläuterten Antennengewichtungs-verifikationsverfahrens bzw. Antenna-Weight-Verification-Verfahrens in der Regel feststellen, ob die betreffende Basisstation die vorgegebenen Antennengewichtungsfaktoren oder statt dessen suboptimale Antennengewichtungsfaktoren verwendet. Dies verhindert jedoch nicht, dass aufgrund der von der Basisstation verwendeten falschen Antennengewichtungsfaktoren die Empfangsleistung am Endgerät unter dem Optimum liegt.

Noch problematischer ist der Fall bei solchen Systemen, bei denen das Endgerät gleichzeitig von mehreren verschiedenen Basisstationen die Signale erhält, d. h. bei denen eine Funkverbindung zwischen dem Endgerät und dem Netz parallel über mehrere Basisstationen aufrechterhalten wird. Dies ist beispielsweise beim UMTS-Standard im sog. Frequenzdivisionsduplex- bzw. "frequency division duplex" FDD-Modus möglich. Dieses Verfahren hat den Vorteil, dass ein im Netz bewegtes Endgerät gleitend zwischen den einzelnen Basisstationen übergeben werden kann, was als sogenanntes weiches Übergabeverfahren bzw. "Soft-Handover" bezeichnet wird. Bei diesem Soft-Handover wird folglich nicht beim Übertritt des Mobilfunkgeräts von einer Zelle in eine weitere Zelle "hart" von einem Kanal auf einen neuen Kanal gewechselt. Stattdessen wird, sobald sich das Endgerät in Reichweite einer Basisstation befindet, eine zusätzliche Verbindung zu dieser Basisstation aufgebaut, während die Verbindung über die anderen Basissta tionen erhalten bleibt. Erst, wenn sich das Endgerät aus dem Bereich einer Basisstation herausbewegt, wird diese Verbindung unterbrochen, während die übrigen Verbindungen weiter aufrecht erhalten bleiben. Da meist zwei oder mehrere Basisstationen dasselbe Signal senden, steigt bei diesem Verfahren zudem die Empfangsqualität und Verbindungsabrisse zum Netz sind weniger wahrscheinlich.

Vom Endgerät werden dabei die von den verschiedenen Basisstationen über verschiedene, Abwärtsverbindungs- bzw. "Downlink"-Kanäle,bei UMTS insbesondere der "Downlink-DPCH", festzugeordneter, physikalischer Abwärtsverbindungskanal bzw. "Downlink -Dedicated Physical Channel", genannt) empfangenen Signale zunächst getrennt demoduliert und dann kombiniert. Auf der Sendeseite des Endgeräts gibt es jedoch nur einen physikalischen Uplink-Kanal, d. h. das Endgerät sendet nur ein Signal aus, welches zu allen Basisstationen übermittelt wird. Für die Optimierung der Antennengewichtungsfaktoren der einzelnen Basisstationen im Rahmen des oben erläuterten Verfahrens bedeutet dies, dass das Endgerät nicht jeder Basisstation gezielt den für die jeweilige Basisstation optimalen Antennengewichtungsfaktor übermitteln kann, um so die einzelnen Downlink-Kanäle zwischen den verschiedenen Basisstationen und dem Endgerät zu optimieren. Statt dessen muss es einen gemeinsamen Antennengewichtungsfaktor ermitteln, welcher die Empfangsleistung der Summe aller Downlink-Kanäle maximiert.

Dies kann analog zu Gleichung (1) durch Maximierung der Leistung P gemäß

$$P = \underline{w}^H \left( H_{B1}^H H_{B1} + H_{B2}^H H_{B2} + \ldots + H_{Bi}^H H_{Bi} + \ldots H_{Bn}^H H_{Bn} \right) \underline{w} \qquad (3)$$

erfolgen. Hierbei sind die Vektoren bzw. Matrizen $H_{Bi}$, i = 1 bis n, die jeweils vom Endgerät geschätzte Kanalimpulsantwort der i-ten Basisstation und $H_{Bi}^H$ wieder die konjugiert komplex transponierten Vektoren bzw. Matrizen dazu. Der so ermittelte Antennengewichtungsfaktor $\underline{w}$ wird dann als Feedback-Message in üblicher Weise auf dem Uplink-Kanal, z. B. auf dem Uplink-DPCCH, dem zugeordneten, physikalischen Aufwärtsverbindungskontrollkanal bzw. "Uplink dedicated physical control channel" , vom Endgerät versendet und von allen Basisstationen empfangen und ausgewertet.

Im Allgemeinen sind jedoch die Ausbreitungsbedingungen vom Endgerät zu den Basisstationen unterschiedlich, so dass einige der Basisstationen den Uplink-Kanal besser empfangen als andere. Hinzu kommt, dass die Sendeleistung des Endgeräts bei den derzeit üblichen Standards so geregelt wird, dass sie nur für die Basisstationen mit den besten Ausbreitungsbedingungen optimiert wird. Dies führt dazu, dass gegebenenfalls nur für eine einzige der Basisstationen die Feedback Error Rate in dem oben genannten Bereich von 4 bis 10 % liegt. Für alle anderen Basisstationen kann die Feedback Error Rate deutlich höher liegen, so dass nur selten alle Basisstationen den vom Endgerät ermittelten Antennengewichtungsfaktor benutzen. Andererseits wurde aber dieser Antennengewichtungsfaktor so berechnet, dass sämtliche Basisstationen diesen Antennengewichtungsfaktor berücksichtigen, um gemeinsam die Empfangsleistung zu optimieren. Daher reicht es nicht aus, wenn nur ein Teil der Basisstationen den Antennengewichtungsfaktor richtig empfängt und die Antennengewichtung danach einstellt. Insgesamt führt dies folglich dazu, dass nur in den selteneren Fällen tatsächlich die Empfangsleistung am Endgerät optimal sein wird.

Es ist Aufgabe der vorliegenden Erfindung, das Verfahren der eingangs genannten Art derart weiterzubilden, dass mit einer höheren Wahrscheinlichkeit die Empfangsleistung am Endgerät verbessert werden kann.

Diese Aufgabe wird dadurch gelöst, dass für die einzelnen Basisstationen jeweils ein Übertragungsqualitätswert eines Übertragungskanals zwischen der betreffenden Basisstation und dem Endgerät ermittelt wird und bei der Bestimmung des Anten nengewichtungsfaktors die Kanalkoeffizienten der einzelnen Basisstationen jeweils in Abhängigkeit vom ermittelten Übertragungsqualitätswert zwischen der betreffenden Basisstation und dem Endgerät priorisiert berücksichtigt werden.

Das heißt, bei der Bestimmung des Antennengewichtungsfaktors werden erfindungsgemäß die Basisstationen bevorzugt, welche die Feedback-Message auch mit genügend hoher Zuverlässigkeit empfangen. Eine solche Priorisierung hat den Vorteil, dass bei einem fehlerfreien Uplink-Kanal zu allen Basisstationen die Empfangsleistung am Endgerät maximal wird, da dann alle Basisstationen bei der Berechnung der Antennengewichtungsfaktoren gleich berücksichtigt wurden. Kann der Uplink-Kanal dagegen von einigen Basisstationen nur sehr fehlerhaft empfangen werden, so verwenden diese Basisstationen aufgrund der fehlerhaften Übermittlung ohnehin nur mehr oder weniger randomisierte Antennengewichtungsfaktoren. Damit können diese Basisstationen zur tatsächlichen Empfangsleistung zwangsläufig wesentlich weniger beitragen als bei der Bestimmung der Antennengewichtungsfaktoren nach der herkömmlichen Methode angenommen wird. Da bei dem erfindungsgemäßen Verfahren diese Basisstationen bei der Bestimmung der Antennengewichtungsfaktoren dagegen gar nicht oder nur untergeordnet berücksichtigt werden, werden dementsprechend die Basisstationen, die den Uplink-Kanal mit ausreichender Qualität empfangen und sich somit nach dem vom Endgerät ermittelten Antennengewichtungsfaktor richten, einen entsprechend höheren Anteil zur Empfangsleistung beitragen. Insgesamt wird folglich durch die Priorisierung die gesamte Empfangsleistung optimiert und damit die Leistungsfähigkeit des Verfahrens erheblich verbessert.

Vorteilhafterweise ist es hierzu nicht erforderlich, irgendwelche Standards im Mobilfunknetz zu verändern, d. h. es sind keine speziellen Aktivitäten der Basisstationen bzw. des Hintergrundnetzes erforderlich. Es müssen lediglich die Endgeräte in der Lage sein, die Qualität des Übertragungskanals zu bestimmen oder abzuschätzen, und es müssen die Berechnungsarten innerhalb des mobilen Endgeräts erfindungsgemäß verändert werden.

Ein mobiles Endgerät zur Verwendung in einem solchen Verfahren muss neben einer Kanalkoeffizienten-Ermittlungseinheit, um für die zugeordneten Basisstationen jeweils die Kanalkoeffizienten für die Übertragungspfade zwischen den Antennen der Basisstation und dem Endgerät zu ermitteln und einer Antennengewichtungsfaktor-Ermittlungseinheit, welche anhand der Kanalkoeffizienten einen Antennengewichtungsfaktor bestimmt und an die Basisstation übermittelt, zusätzlich eine Übertragungskanalkontrolleinheit aufweisen, um für die einzelnen Basisstationen jeweils einen Übertragungsqualitätswert eines Übertragungskanals zwischen der betreffenden Basisstation und dem Endgerät zu ermitteln. Außerdem muss die Antennengewichtungsfaktor-Ermittlungseinheit derart ausgebildet sein, dass sie bei der Bestimmung des Antennengewichtungsfaktors die Kanalkoeffizienten der einzelnen Basisstationen jeweils in Abhängigkeit vom ermittelten Übertragungsqualitätswert zwischen der betreffenden Basisstation und dem Endgerät priorisiert berücksichtigt. Die Übertragungskanal-Kontrolleinheit kann hierbei auch Teil der Antennengewichtungsfaktor-Ermittlungseinheit sein.

Vorzugsweise wird die Berücksichtigung einer Priorität der einzelnen Basisstationen bei der Berechnung des Antennengewichtungsfaktors so realisiert, dass das Endgerät eine Priorisierungseinheit aufweist, welche anhand der Übertragungsqualitätswerte für die einzelnen Basisstationen Gewichtungsfaktoren bestimmt, die von der Antennengewichtungsfaktor-Ermittlungseinheit bei der Berechnung des Antennengewichtungsfaktors herangezogen werden. Auch diese Priorisierungseinheit kann Teil der Antennengewichtungsfaktor-Ermittlungseinheit sein.

Die weiteren abhängigen Ansprüche enthalten besonders vorteilhafte Ausgestaltungen und Weiterbildungen des erfindungsgemäßen Verfahrens. Dabei kann das erfindungsgemäße mobile Endgerät auch gemäß den Merkmalen der Verfahrensansprüche weitergebildet sein.

Bei einem besonders einfachen, bevorzugten Ausführungsbeispiel erfolgt die Priorisierung derart, dass bei der Ermittlung des Antennengewichtungsfaktors nur die Kanalkoeffizienten der Basisstation berücksichtigt werden, bei denen der Übertragungsqualitätswert einen bestimmten Grenzwert unter- oder überschreitet. Für alle anderen Basisstationen werden die Kanalkoeffizienten überhaupt nicht berücksichtigt. Hierzu könnte beispielsweise die oben genannte Priorisierungseinheit anhand der Übertragungsqualitätswerte für die einzelnen Basisstationen festlegen, ob diese einen Gewichtungsfaktor 0 oder 1 erhalten. Dementsprechend würden bei der Berechnung des Antennengewichtungsfaktors gemäß Formel (3) die einzelnen Kanalkoeffizienten bzw. Kanalimpulsantworten $H_{Bi}$ für die verschiedenen Basisstationen entweder mit dem Gewichtungsfaktor 0 oder 1 multipliziert, so dass die Kanalkoeffizienten der betreffenden Basisstationen entweder ganz oder gar nicht berücksichtigt werden.

Alternativ ist es auch möglich, bei der Festlegung des Antennengewichtungsfaktors die Kanalkoeffizienten der Basisstationen proportional oder umgekehrt proportional zum Übertragungsqualitätswert des Übertragungskanals zwischen der betreffenden Basisstation und dem Endgerät zu gewichten. Hierzu könnten beispielsweise Gewichtungsfaktoren proportional zum Übertragungsqualitätswert bzw. umgekehrt proportional zum Übertragungsqualitätswert gewählt und mit den Kanalkoeffizienten bzw. der Kanalimpulsantwort multipliziert werden.

Prinzipiell könnte aber auch ein Übertragungsqualitätswert verwendet werden, welcher der Übertragungsqualität eines Downlink-Kanals von der Basisstation zum Endgerät entspricht, beispielsweise ein Wert entsprechend der Leistung des jeweiligen Downlink-Kanals am Endgerät. Es wird dann davon ausgegangen, dass näherungsweise die Basisstationen, deren Downlink-Kanal vom Endgerät nur mit geringer Leistung empfangen werden kann, mit einer größeren Wahrscheinlichkeit auch die Feedback-Message im Uplink-Kanal nicht richtig empfangen können. Da jedoch die Downlink-Kanäle und der Uplink-Kanal in unterschiedlichen Frequenzbereichen liegen, ist dieses Verfahren nur bedingt geeignet, und es sollte vorzugsweise ein Übertragungsqualitätswert ermittelt werden, welcher direkt ein Maß für die Übertragungsqualität des Uplink-Kanals ist.

Hierfür gibt es verschiedene Möglichkeiten. Zum einen kann das Endgerät zur Ermittlung des Übertragungsqualitätswerts des Uplink-Kanals die Feedback Error Rate heranziehen, welche durch die Kontrolle des von der betreffenden Basisstation eingestellten Antennengewichtungsfaktors bestimmt werden kann. Diese Feedback Error Rate ist direkt ein Maß für die Abweichung des von der Basisstation jeweils empfangenen Antennengewichtungsfaktors vom ursprünglich gesendeten Antennengewichtungsfaktor und kann daher auch unmittelbar als Übertragungsqualitätswert verwendet werden.

Die Feedback Error Rate kann mittels des bereits weiter oben erwähnten Antenna-Weight-Verification-Verfahrens bestimmt werden. Ein solches Verfahren wird auch bereits bei den bisher bekannten Verfahren von den Endgeräten genutzt, um die tatsächlich von der Basisstation verwendeten Antennengewichtungsfaktoren zu erfahren und damit den zugeordneten Downlink-Datenkanal (zugeordneter physikalischer Abwärtsverbindungskanal bzw. "Downlink-Dedicated Physical Channel" DPCH) demodulieren zu können. Zur Ermittlung der Antennengewichtungsfaktoren wird dabei ausgenutzt, dass der Downlink-DPCH in der Regel ebenfalls eine bekannte Symbolfolge (beim UMTS die sog. Pilot Symbols) als Kontrollsignal enthält. Durch Vergleich der empfangenen Symbolfolge mit der bekannten, gesuchten Symbolfolge kann das Endgerät prüfen, ob die signali sierten optimalen Antennengewichtungsfaktoren oder andere Antennengewichtungsfaktoren von der jeweiligen Basisstation verwendet wurden.

Eine andere Alternative besteht darin, dass das Endgerät einen Übertragungsqualitätswert des Uplink-Kanals anhand von Sendeleistungsanforderungssignalen ermittelt, die die betreffende Basisstation an das Endgerät sendet. So wird beispielsweise im UMTS-Standard von den Basisstationen regelmäßig ein sog. Übertragungsleistungskontroll-Signal bzw. "Transmit Power Control-Signal" bzw. TPC-Signal im Downlink-DPCH mitgesendet, mit dem das Endgerät aufgefordert wird, die Leistung zu erhöhen oder zu verringern. Fordert eine Basisstation ständig eine höhere Sendeleistung, so ist davon auszugehen, dass diese Basisstation den Uplink-Kanal nicht gut genug empfängt.

Die Erfindung wird im Folgenden unter Hinweis auf die beigefügten Figuren anhand eines Ausführungsbeispiels noch einmal näher erläutert. Es zeigen:

Figur 1 eine schematische Darstellung eines Teils eines Mobilfunknetzes mit drei Basisstationen, die gleichzeitig an ein mobiles Endgerät senden,

Figur 2 eine schematische Darstellung eines erfindungsgemäßen mobilen Endgeräts,

Figur 3 eine schematische Darstellung der Struktur eines Zeitschlitzes bzw. "Slots" innerhalb eines Rahmens eines Downlink-DPCH nach der derzeitigen UMTS-Spezifikation.

Für die folgende Beschreibung wird davon ausgegangen, dass es sich bei dem zellularen Funknetz um ein UMTS-Mobilfunknetz nach dem derzeitigen Standard handelt. Es wird weiterhin davon ausgegangen, dass - wie im derzeitigen Standard üblich - jede Basisstation nur mit zwei Antennen an das Endgerät sen det. Die Erfindung ist aber ausdrücklich nicht auf derartige zellulare Netze beschränkt. Insbesondere ist es ohne weiteres möglich, die Erfindung auch in Netzen zu verwenden, deren Basisstationen mehr als zwei Antennen verwenden.

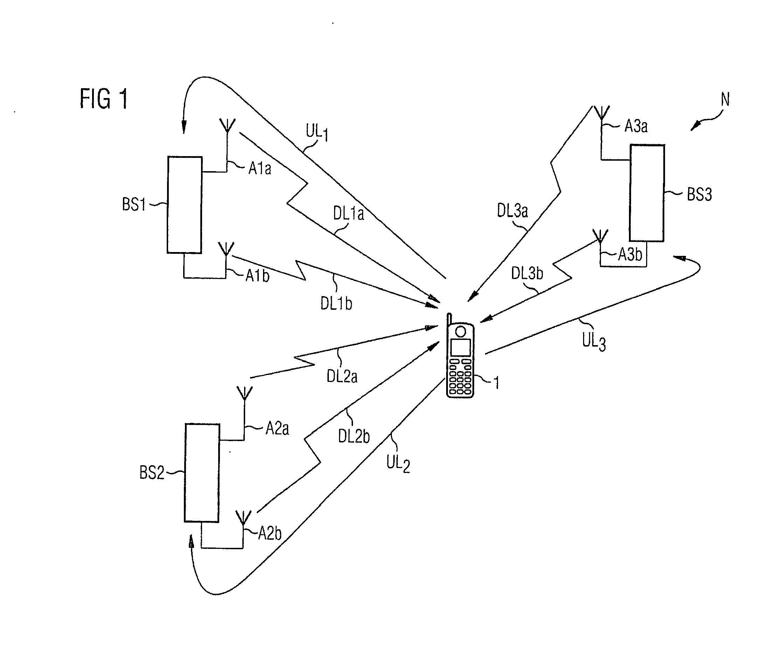

Wie aus Figur 1 zu ersehen ist, ist es im UMTS-Standard möglich, dass ein Endgerät 1 gleichzeitig eine Verbindung zum Netz N über mehrere Basisstationen BS1, BS2, BS3 (auch "node-B" genannt) aufrechterhält.

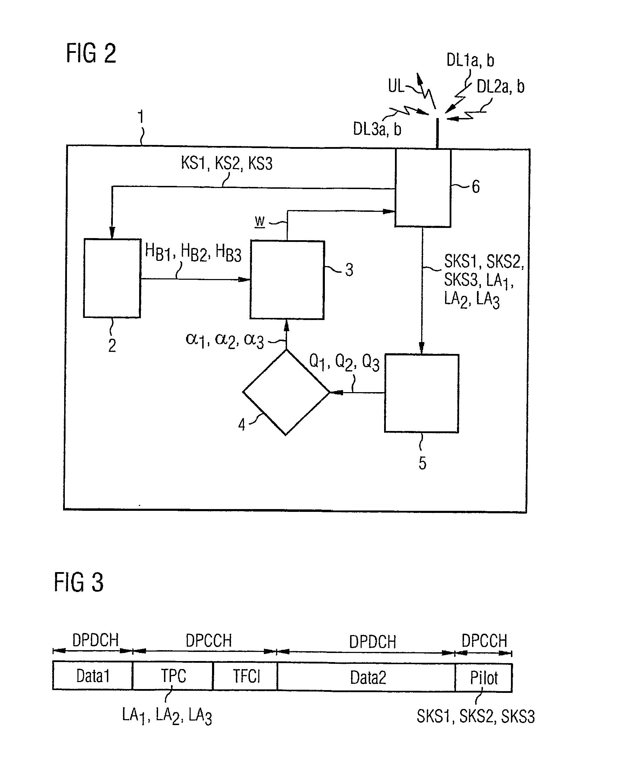

Jede dieser Basisstationen BS1, BS2, BS3 sendet dabei über einen eigenen Downlink-Kanal (Downlink-DPCH) wobei jedoch die zu übertragenden Nutzdaten, d. h. die nicht zur Steuerung der Übertragung verwendeten Daten, in allen Downlink-DPCH identisch sind. Zur näheren Erläuterung wird auf Figur 3 verwiesen, in der ein Slot eines Rahmens eines Downlink-DPCH dargestellt ist. Die mit DPDCH (Dedicated Physical Data Channel) bezeichneten Bereiche enthalten hierbei jeweils die reinen Nutzdaten, beispielsweise übermittelte Gesprächs-, Bild-, Text-, Multimediadaten etc. Diese Daten werden in allen Downlink-DPCH der verschiedenen Basisstationen parallel übertragen. Die mit DPCCH (Dedicated Physical Control Channel) bezeichneten Bereiche enthalten jeweils Kontrollsignale, die dazu dienen, die Verbindung zwischen der jeweiligen Basisstation BS1, BS2, BS3 und dem Endgerät 1 zu ermöglichen bzw. aufrechtzuerhalten und zu optimieren. Diese Daten sind in den Downlink-DPCH der verschiedenen Basisstationen BS1, BS2, BS3 teilweise unterschiedlich.

Durch das Senden des DPDCH über mehrere Basisstationen besteht zum einen eine höhere Wahrscheinlichkeit, dass das Endgerät 1 die Nutzdaten richtig und störungsfrei empfängt. Außerdem wird die Wahrscheinlichkeit eines vollständigen Verbindungsabrisses zwischen dem Endgerät 1 und dem Netz N reduziert. Weiterhin ermöglicht dieses Verfahren das bereits beschriebene Soft-Handover.

Das mobile Endgerät 1 sendet dabei selber nur über einen Uplink-Kanal, d. h. es sendet nicht spezifisch unterschiedliche Signale an die verschiedenen Basisstationen BS1, BS2, BS3, sondern sendet - wie bei den bisher üblichen Verfahren, beispielsweise im GSM-Netz - Signale aus, die von allen Basisstationen BS1, BS2, BS3 empfangen und demoduliert bzw. decodiert werden können. Dieser Uplink-Kanal ist in Figur 2 mit UL bezeichnet. In Figur 1 ist der Uplink-Kanal dagegen zu den verschiedenen Basisstationen unterschiedlich mit $UL_1$, $UL_2$, $UL_3$ bezeichnet. Dies soll jedoch lediglich verdeutlichen, dass der an sich physikalisch identische Uplink-Kanal von den verschiedenen Basisstationen BS1, BS2, BS3 unterschiedlich gut empfangen werden kann.

Wie aus Figur 1 weiterhin deutlich wird, ist es im UMTS-Verfahren möglich, ein sog. Sendediversitätsverfahren zu nutzen, bei dem die einzelnen Basisstationen BS1, BS2, BS3 jeweils über zwei Antennen A1a, A1b, A2a, A2b, A3a, A3b parallel senden. Durch die Verwendung von zwei Sendeantennen A1a, A1b, A2a, A2b, A3a, A3b an den Basisstationen BS1, BS2, BS3 kann die Performance der Übertragung erheblich verbessert werden.

Die Antennengewichtung zwischen den beiden Antennen A1a, A1b, A2a, A2b, A3a, A3b sollte dabei jeweils so eingestellt werden, dass die Empfangsleistung am Endgerät 1 maximal ist. Hierzu berechnet das mobile Endgerät 1 nach dem nachfolgend beschriebenen Verfahren einen Antennengewichtungsfaktor und sendet diesen über den Uplink-Kanal UL, $UL_1$, $UL_2$, $UL_3$ an die verschiedenen Basisstationen BS1, BS2, BS3.

Bezüglich der hierzu im mobilen Endgerät 1 erforderlichen Komponenten und deren Zusammenwirkung wird auf Figur 2 verwiesen, in welcher die für die Erfindung wesentlichsten Komponenten schematisch dargestellt sind. Das erfindungsgemäße mobile Endgerät 1 weist darüber hinaus auch alle anderen üblichen Komponenten wie Codierer, Decodierer bzw. Modulator, Demodulator, eine Benutzerschnittstelle mit Display, Tastatur, Lautsprecher und Mikrofon, eine Schnittstelle zur Aufnahme einer SIM-Karte oder dergleichen sowie einen Speicher etc. auf, mit denen üblicherweise mobilfunkfähige Endgeräte ausgestattet sind. Diese Komponenten sind dem Fachmann hinreichend bekannt und werden daher nicht weiter diskutiert. Sie sind deswegen der besseren Übersichtlichkeit halber in Figur 2 nicht dargestellt.

Zur Berechnung des Antennengewichtungsfaktors versucht das Endgerät von allen aktuell sendenden Basisstationen BS1, BS2, BS3, die Kanalkoeffizienten $H_{B1}$, $H_{B2}$, $H_{B3}$ zu ermitteln. Hierzu empfängt das Endgerät 1 mittels einer üblichen Sende-/Empfangseinheit 6 spezielle Kontrollsignale KS1, KS2, KS3 von den verschiedenen Basisstationen BS1, BS2, BS3. Im UMTS-Standard handelt es sich hierbei um spezielle Trainingssequenzen - CPICH genannt - zur Bestimmung der Kanalkoeffizienten. Dabei sendet jede Basisstation BS1, BS2, BS3 über die beiden Antennen, d. h. über die beiden Übertragungspfade DL1a, DL1b, DL2a, DL2b, DL3a, DL3b unterschiedliche Signale auf einem gemeinsamen Pilotkanal bzw. "common pilot channel " CPICHaus.

Beim Aussenden der Kontrollsignale KS1, KS2, KS3 wird kein spezieller Antennengewichtungsfaktor eingestellt, so dass dieses Signal unabhängig von den aktuellen Antennengewichtungsfaktoren ist. Diese Kontrollsignale KS1, KS2, KS3 der einzelnen Basisstationen BS1, BS2, BS3 sind dem mobilen Endgerät 1 bekannt, so dass es anhand der Signale KS1, KS2, KS3 in einer Kanalkoeffizienten-Ermittlungseinheit 2 die Kanalkoeffizienten $H_{B1}$, $H_{B2}$, $H_{B3}$ für die einzelnen Übertragungspfade DL1a, DL1b, DL2a, DL2b, DL3a, DL3b abschätzen kann.

Die ermittelten Kanalkoeffizienten $H_{B1}$, $H_{B2}$, $H_{B3}$ der einzelnen Übertragungspfade DL1a, DL1b, DL2a, DL2b, DL3a, DL3b bzw. Basisstationen BS1, BS2, BS3 werden dann an eine Antennengewichtungsfaktor-Ermittlungseinheit 3 weitergeleitet, welche nach dem weiter unten beschriebenen Verfahren einen Antennengewichtungsfaktor $\underline{w}$ berechnet. Der Antennengewichtungsfaktor $\underline{w}$ wird dann wiederum über die Sende-/Empfangseinrichtung 6 im Uplink-Kanal UL an die einzelnen Basisstationen BS1, BS2, BS3 übermittelt.

Anhand von weiteren Steuer- und/oder Kontrollsignale SKS1, SKS2, SKS3, die von der Sende-/Empfangseinrichtung 6 an eine Übertragungskanal-Kontrolleinheit 5 übermittelt werden, werden Übertragungsqualitätswerte $Q_1$, $Q_2$, $Q_3$ ermittelt. Die Übertragungsqualitätswerte Q1, Q2, Q3 sind ein Maß dafür, wie gut die Uplink-Verbindung $UL_1$, $UL_2$, $UL_3$ zu den einzelnen Basisstationen BS1, BS2, BS3 ist, d. h. mit welcher Qualität der Uplink-Kanal UL von den jeweiligen Basisstationen BS1, BS2, BS3 empfangen wird. Bei diesen Kontrollsignalen SKS1, SKS2, SKS3 kann es sich beispielsweise um den in Figur 3 dargestellten Pilot im DPCCH am Ende eines Slots handeln. Hierbei handelt es sich ebenfalls um dem mobilen Endgerät bekannte Daten, so dass durch einen Vergleich des empfangenen Pilot-Signals mit dem bekannten, ursprünglich gesendeten Signal das Endgerät auf die eingestellten Antennengewichtungsfaktoren schließen kann. Da das Endgerät ja selber ständig die Antennengewichtungsfaktoren $\underline{w}$ vorgibt, kann durch Vergleich des vorgegebenen Antennengewichtungsfaktors mit dem tatsächlich an der jeweiligen Basisstation BS1, BS2, BS3 eingestellten Antennengewichtungsfaktor eine sog. Feedback Error Rate bestimmt werden, welche als Übertragungsqualitätswert $Q_1$, $Q_2$, $Q_3$ verwendet werden kann.

Alternativ oder zusätzlich kann die Ermittlung der Übertragungsqualität auch anhand der Sendeleistungsanforderungssignale LA1, LA2, LA3 der Basisstationen erfolgen, die an die Übertragungskanalkontrolleinheit 5 übergeben werden können. Beim UMTS-Standard ist ein solches Leistungsanforderungssignal LA1, LA2, LA3 das ebenfalls in Figur 3 innerhalb des Slots dargestellte TPC-Signal. Die TPC-Kommandos der einzel nen Basisstationen BS1, BS2, BS3 können relativ einfach ausgewertet werden.

Das TPC-Signal besteht aus einem Bit, wobei TPC = 1 für das Endgerät signalisiert, dass es die Sendeleistung erhöhen soll und TPC = 0 bedeutet, dass das Endgerät die Leistung herabsetzen soll. Ein ständiger Wechsel zwischen TPC = 0 und TPC = 1 bedeutet somit, dass die Leistung in etwa stimmt und dass die jeweilige Basisstation den Uplink-Kanal gut empfangen kann. Bei einer Basisstation, die über einen gewissen Zeitraum permanent nur TPC = 1 sendet, ist dagegen davon auszugehen, dass die Leistung zu gering ist bzw. das Signal zu Rauschen bzw. "Signal to Interference Ratio" SIR auf dem Uplink-DPCH zu niedrig ist und somit die Feedback-Message nicht zuverlässig detektiert werden kann.

Die auf die eine oder andere Weise ermittelten Übertragungsqualitätswerte $Q_1$, $Q_2$, $Q_3$ werden dann an eine Priorisierungseinheit 4 übergeben. Diese legt dann Gewichtungsfaktoren $\alpha_1$, $\alpha_2$, $\alpha_3$ fest, mit denen die einzelnen Basisstationen BS1, BS2, BS3 bzw. deren Kanalkoeffizienten $H_{B1}$, $H_{B2}$, $H_{B3}$ bei der Berechnung des Antennengewichtungsfaktors $\underline{w}$ berücksichtigt werden. Im einfachsten Fall prüft die Priorisierungseinheit 4 nur, ob der Übertragungsqualitätswert $Q_1$, $Q_2$, $Q_3$ eine bestimmte Schwelle erreicht - beispielsweise ob die Feedback Error Rate unter einer bestimmten Fehlerrate liegt - und setzt dann den entsprechenden Gewichtungsfaktor $\alpha_1$, $\alpha_2$, $\alpha_3$ auf 1 und andernfalls auf 0.

Die Gewichtungsfaktoren $\alpha_1$, $\alpha_2$, $\alpha_3$ werden dann an die Antennengewichtungsfaktor-Ermittlungseinheit 3 übergeben, welche diese Gewichtungsfaktoren $\alpha_1$, $\alpha_2$, $\alpha_3$ entsprechend berücksichtigt. Die Berechnung des Antennengewichtungsfaktors erfolgt dabei analog zu der oben genannten Gleichung (3) durch Maximierung der Empfangsleistung P, wobei nun gilt:

$$P = \underline{w}^{H}\left(\alpha_1 H_{B1}{}^{H} H_{B1} + \alpha_2 H_{B2}{}^{H} H_{B2} + \alpha_3 H_{B3}{}^{H} H_{B3}\right)\underline{w} \qquad (4)$$

Diese Gleichung ist ebenso wie Gleichung (3) auf eine beliebige Anzahl von Basisstationen i = 1 bis n erweiterbar.

Aufgrund der Berücksichtigung der Qualität der Verbindung zu den einzelnen Basisstation BS1, BS2, BS3 anhand der Gewichtungsfaktoren $\alpha_1$, $\alpha_2$, $\alpha_3$ ist dabei sichergestellt, dass lediglich die Kanalkoeffizienten $H_{B1}$, $H_{B2}$, $H_{B3}$ derjenigen Basisstationen BS1, BS2, BS3 bei der Berechnung des Antennengewichtungsfaktors berücksichtigt wurden, die den Antennengewichtungsfaktor $\underline{w}$ auch mit einigermaßen hoher Wahrscheinlichkeit richtig empfangen und umsetzen.

Die in Figur 2 dargestellten Komponenten können in Form von Hardware- und/oder Softwaremodulen im Endgerät realisiert werden. Insbesondere ist es möglich, einen Teil der Komponenten, wie z. B. die Übertragungskanalkontrolleinheit, die Priorisierungseinheit, die Kanalkoeffizienten-Ermittlungseinheit sowie die Antennengewichtungsfaktor-Ermittlungseinheit in Form von Software auf einem bereits vorhandenen Prozessor des Endgeräts, welcher auch zur Steuerung anderer Funktionen des Endgeräts dient, zu implementieren.

Abschließend wird noch einmal darauf hingewiesen, dass es sich bei dem in den Figuren dargestellten und zuvor beschriebenen Aufbau des Mobilfunknetzes und des Endgeräts lediglich um ein Ausführungsbeispiel handelt, welches vom Fachmann modifiziert werden kann, ohne den Rahmen der Erfindung zu verlassen. So ist es z. B. nicht notwendig, dass die Priorisierungseinheit, die Übertragungskanal-Kontrolleinheit sowie die Kanalkoeffizienten-Ermittlungseinheit als echte physikalische, getrennte Einheiten bzw. Softwaremodule neben der Antennengewichtungsfaktor-Ermittlungseinheit bestehen, sondern es ist ohne weiteres möglich, die einzelnen Komponenten auch in einer Funktionseinheit zu kombinieren. Ebenso kann beispielsweise die Übertragungskanalkontrolleinheit mit der Priorisierungseinheit zusammengefasst und/oder die Kanalkoeffi zienten-Ermittlungseinheit in die Antennengewichtungsfaktor-Ermittlungseinheit integriert werden. Die Darstellung in Figur 2 erfolgt insoweit in erster Linie zur Verdeutlichung der einzelnen Stufen innerhalb des Prozesses zur Ermittlung des Antennengewichtungsfaktors.

Bezugszeichenliste

| | |
|---|---|
| 1 | Endgerät |
| 2 | Kanalkoeffizienten-Ermittlungseinheit |
| 3 | Antennengewichtungsfaktor-Ermittlungseinheit |
| 4 | Priorisierungseinheit |
| 5 | Übertragungskanalkontrolleinheit |
| 6 | Sende-/Empfangseinheit |
| N | zellulares Funknetz |
| $\underline{w}$ | Antennengewichtungsfaktor |
| $Q_1$ | Übertragungsqualitätswert |
| $Q_2$ | Übertragungsqualitätswert |
| $Q_3$ | Übertragungsqualitätswert |
| $\alpha_1$ | Gewichtungsfaktor |
| $\alpha_2$ | Gewichtungsfaktor |
| $\alpha_3$ | Gewichtungsfaktor |
| UL | Uplink-Kanal |
| $H_{B1}$ | Kanalkoeffizient |
| $H_{B2}$ | Kanalkoeffizient |
| $H_{B3}$ | Kanalkoeffizient |
| $UL_1$ | Uplink-Kanal |
| $UL_2$ | Uplink-Kanal |

| | |
|---|---|
| $UL_3$ | Uplink-Kanal |
| $LA_1$ | Sendeleistungsanforderungssignal |
| $LA_2$ | Sendeleistungsanforderungssignal |
| $LA_3$ | Sendeleistungsanforderungssignal |
| A1a | Antenne |
| A1b | Antenne |
| A2a | Antenne |
| A2b | Antenne |
| A3a | Antenne |
| A3b | Antenne |
| BS1 | Basisstation |
| BS2 | Basisstation |
| BS3 | Basisstaion |
| KS1 | Kontrollsignal |
| KS2 | Kontrollsignal |
| KS3 | Kontrollsignal |
| DL1a | Übertragungspfad |
| DL1b | Übertragungspfad |
| DL2a | Übertragungspfad |
| DL2b | Übertragungspfad |
| DL3a | Übertragungspfad |
| DL3b | Übertragungspfad |
| SKS1 | Kontrollsignal |
| SKS2 | Kontrollsignal |
| SKS3 | Kontrollsignal |

**Patentansprüche**

1. Verfahren zur Ermittlung eines Antennengewichtungsfaktors ($\underline{w}$) für eine Einstellung einer Antennengewichtung in Basisstationen (BS1, BS2, BS3) eines zellularen Funknetzes (N), in welchem eine Funkverbindung zwischen einem mobilen Endgerät (1) und dem Netz (N) gleichzeitig über mehrere Basisstationen (BS1, BS2, BS3) bestehen kann, die jeweils parallel über mehrere Übertragungspfade (DL1a, DL1b, DL2a, DL2b, DL3a, DL3b) von unterschiedlichen Antennen (A1a, A1b, A2a, A2b, A3a, A3b) aus an das Endgerät(1) senden,

wobei das Endgerät (1) für die zugeordneten Basisstationen (BS1, BS2, BS3) jeweils Kanalkoeffizienten ($H_{B1}$, $H_{B2}$, $H_{B3}$) für die Übertragungspfade (DL1a, DL1b, DL2a, DL2b, DL3a, DL3b) von den Antennen (A1a, A1b, A2a, A2b, A3a, A3b) der betreffenden Basisstation (BS1, BS2, BS3) zu dem Endgerät (1) ermittelt,
und anhand der Kanalkoeffizienten ($H_{B1}$, $H_{B2}$, $H_{B3}$) einen Antennengewichtungsfaktor ($\underline{w}$) bestimmt und diesen an die Basisstationen (BS1, BS2, BS3) übermittelt,
**dadurch gekennzeichnet,**
**dass** für die einzelnen Basisstationen (BS1, BS2, BS3) jeweils ein Übertragungsqualitätswert ($Q_1$, $Q_2$, $Q_3$) eines Übertragungskanals zwischen der betreffenden Basisstation (BS1, BS2, BS3) und dem Endgerät (1) ermittelt wird und bei der Bestimmung des Antennengewichtungsfaktors ($\underline{w}$) die Kanalkoeffizienten ($H_{B1}$, $H_{B2}$, $H_{B3}$) der einzelnen Basisstationen (BS1, BS2, BS3) jeweils in Abhängigkeit vom ermittelten Übertragungsqualitätswert ($Q_1$, $Q_2$, $Q_3$) zwischen der betreffenden Basisstation (BS1, BS2, BS3) und dem Endgerät (1) priorisiert berücksichtigt werden.

2. Verfahren nach Anspruch 1, **dadurch gekennzeichnet, dass** die Priorisierung derart erfolgt, dass bei der Ermittlung des Antennengewichtungsfaktors ($\underline{w}$) nur die Kanalkoeffizienten ($H_{B1}$, $H_{B2}$, $H_{B3}$) der Basisstationen (BS1, BS2, BS3) berücksich tigt werden, bei denen der Übertragungsqualitätswert ($Q_1$, $Q_2$, $Q_3$) einen bestimmten Grenzwert unter- oder überschreitet.

3. Verfahren nach Anspruch 1, **dadurch gekennzeichnet, dass** bei der Festlegung des Antennengewichtungsfaktors (w) die Kanalkoeffizienten ($H_{B1}$, $H_{B2}$, $H_{B3}$) der Basisstationen (BS1, BS2, BS3) proportional oder umgekehrt proportional zum Übertragungsqualitätswert ($Q_1$, $Q_2$, $Q_3$) des Übertragungskanals ($UL_1$ $UL_2$, $UL_3$) zwischen der betreffenden Basisstation (BS1, BS2, BS3) und dem Endgerät (1) gewichtet werden.

4. Verfahren nach einem der Ansprüche 1 bis 3, **dadurch gekennzeichnet, dass** der Übertragungsqualitätswert ($Q_1$, $Q_2$, $Q_3$) anhand einer Bit Error Rate und/oder einer Frame Error Rate und/oder einer Sende- bzw. Empfangsleistung ermittelt wird.

5. Verfahren nach einem der Ansprüche 1 bis 4, **dadurch gekennzeichnet, dass** der Übertragungsqualitätswert ($Q_1$, $Q_2$, $Q_3$) ein Maß für die Übertragungsqualität eines Uplink-Kanals ($UL_1$, $UL_2$, $UL_3$) vom Endgerät (1) zu der betreffenden Basisstation (BS1, BS2, BS3) ist.

6. Verfahren nach Anspruch 5, **dadurch gekennzeichnet, dass** das Endgerät zur Ermittlung des Übertragungsqualitätswerts ($Q_1$, $Q_2$, $Q_3$) des Uplink-Kanals ($UL_1$, $UL_2$, $UL_3$) eine Feedback Error Rate durch eine Kontrolle des von der betreffenden Basisstation (BS1, BS2, BS3) eingestellten Antennengewichtungsfaktors bestimmt.

7. Verfahren nach einem der Ansprüche 1 bis 6, **dadurch gekennzeichnet, dass** das Endgerät (1) einen Übertragungsqualitätswert ($Q_1$, $Q_2$, $Q_3$) des Uplink-Kanals ($UL_1$, $UL_2$, $UL_3$) anhand von Sendeleistungsanforderungssignalen (LA1, LA2, LA3) ermittelt, die die betreffende Basisstation (BS1, BS2, BS3) an das Endgerät (1) sendet.

8. Verfahren zum Betrieb eines zellularen Funknetzes (N), bei dem eine Funkverbindung zwischen einem mobilen Endgerät (1) und dem Netz (N) gleichzeitig über mehrere Basisstationen (BS1, BS2, BS3) bestehen kann, welche jeweils parallel über mehrere Übertragungspfade (DL1a, DL1b, DL2a, DL2b, DL3a, DL3b) von unterschiedlichen Antennen (A1a, A1b, A2a, A2b, A3a, A3b) aus an das Endgerät (1) senden,
wobei das Endgerät (1) für die zugeordneten Basisstationen (BS1, BS2, BS3) jeweils Kanalkoeffizienten ($H_{B1}$, $H_{B2}$, $H_{B3}$) für die Übertragungspfade (DL1a, DL1b, DL2a, DL2b, DL3a, DL3b) von den Antennen (A1a, A1b, A2a, A2b, A3a, A3b) der betreffenden Basisstation (BS1, BS2, BS3) zu dem Endgerät (1) ermittelt und anhand der Kanalkoeffizienten ($H_{B1}$, $H_{B2}$, $H_{B3}$) einen Antennengewichtungsfaktor ($\underline{w}$) bestimmt und diesen an die Basisstationen (BS1, BS2, BS3) übermittelt
und die Basisstationen (BS1, BS2, BS3) anhand des Antennengewichtungsfaktors ($\underline{w}$) eine Antennengewichtung einstellen, **dadurch gekennzeichnet,**
**dass** die Ermittlung des Antennengewichtungsfaktors ($\underline{w}$) im Endgerät (1) nach einem Verfahren gemäß einem der Ansprüche 1 bis 7 erfolgt.

9. Mobiles Endgerät (1) zur Verwendung in einem Verfahren nach einem der Ansprüche 1 bis 8,
mit einer Kanalkoeffizienten-Ermittlungseinheit (2), um für die zugeordneten Basisstationen (BS1, BS2, BS3) jeweils Kanalkoeffizienten ($H_{B1}$, $H_{B2}$, $H_{B3}$) für die Übertragungspfade (DL1a, DL1b, DL2a, DL2b, DL3a, DL3b) von den Antennen (A1a, A1b, A2a, A2b, A3a, A3b) der betreffenden Basisstation (BS1, BS2, BS3) zu dem Endgerät (1) zu ermitteln,
und mit einer Antennengewichtungsfaktor-Ermittlungseinheit (3), um anhand der Kanalkoeffizienten ($H_{B1}$, $H_{B2}$, $H_{B3}$)

einen Antennengewichtungsfaktor (w) zu bestimmen und an die Basisstationen (BS1, BS2, BS3) zu übermitteln, **dadurch gekennzeichnet,**

**dass** das Endgerät eine Übertragungskanalkontrolleinheit (5) aufweist, um für die einzelnen Basisstationen (BS1, BS2, BS3) jeweils einen Übertragungsqualitätswert ($Q_1$, $Q_2$, $Q_3$) eines Übertragungskanals zwischen der betreffenden Basisstation (BS1, BS2, BS3) und dem Endgerät (1) zu ermitteln,

und **dass** die Antennengewichtungsfaktor-Ermittlungseinheit (3) derart ausgebildet ist, dass sie bei der Bestimmung des Antennengewichtungsfaktors ($\underline{w}$) die Kanalkoeffizienten ($H_{B1}$, $H_{B2}$, $H_{B3}$) der einzelnen Basisstationen (BS1, BS2, BS3) jeweils in Abhängigkeit vom ermittelten Übertragungsqualitätswert ($Q_1$, $Q_2$, $Q_3$) des Übertragungskanals zwischen der betreffenden Basisstation (BS1, BS2, BS3) und dem Endgerät (1) priorisiert berücksichtigt.

10. Endgerät nach Anspruch 9, **dadurch gekennzeichnet, dass** das Endgerät (1) eine Priorisierungseinheit (4) aufweist, welche anhand der Übertragungsqualitätswerte ($Q_1$, $Q_2$, $Q_3$) für die einzelnen Basisstationen (BS1, BS2, BS3) Gewichtungsfaktoren ($\alpha_1$, $\alpha_1$ $\alpha_1$) bestimmt, und dass diese von der Antennengewichtungsfaktor-Ermittlungseinheit (3) bei der Berechnung des Antennengewichtungsfaktors ($\underline{w}$) herangezogen werden.

**Claims**

1. Method for the determination of an antenna weighting factor ($\underline{W}$) for a setting of an antenna weighting in base stations (BS1, BS2, BS3) of a cellular radio network (N), in which a radio link between a mobile terminal (1) and the network (N) can exist simultaneously over a number of base stations (BS1, BS2, BS3) which in each case transmit in parallel via a number of transmission paths (DL1a, DL1b, DL2a, DL2b, DL3a, DL3b) from different antennas (A1a, A1b, A2a, A2b, A3a, A3b) to the terminal (1),

   a terminal (1) in each case determining channel coefficients ($H_{R1}$, $H_{R2}$, $H_{R3}$) for the transmission paths (DL1a, DL1b, DL2a, DL2b, DL3a, DL3b) from the antennas (A1a, A1b, A2a, A2b, A3a, A3b) of the relevant base station (BS1, BS2, BS3) to the terminal (1), for the associated base stations (BS1, BS2, BS3),

   and determining by means of the channel coefficients ($H_{B1}$, $H_{B2}$, $H_{B3}$) an antenna weighting factor ($\underline{w}$) and transferring this to the base stations (BS1, BS2, BS3), **characterized in that**

   for the individual base stations (BS1, BS2, BS3), in each case a transmission quality value ($Q_1$, $Q_2$, $Q_3$) of a transmission channel between the relevant base station (BS1, BS2, BS3) and the terminal (1) is determined and during a determination of the antenna weighting factor ($\underline{w}$), the channel coefficients ($H_{B1}$, $H_{B2}$, $H_{B3}$) of the individual base stations (BS1, BS2, BS3) are in each case taken into consideration prioritized in dependence on the transmission quality value ($Q_1$, $Q_2$, $Q_3$) determined between the relevant base station (BS1, BS2, BS3) and the terminal (1).

2. Method according to Claim 1, **characterized in that** the prioritization is carried out in such a manner that during the determination of the antenna weighting factor ($\underline{w}$), only the channel coefficients ($H_{B1}$, $H_{B2}$, $H_{B3}$) of the base stations (BS1, BS2, BS3) are taken into consideration in which the transmission quality value ($Q_1$, $Q_2$, $Q_3$) drops below or exceeds a certain limit value.

3. Method according to Claim 1, **characterized in that** during the establishment of the antenna weighting factor (w), the channel coefficients ($H_{B1}$, $H_{B2}$, $H_{B3}$) of the base stations (BS1, BS2, BS3) are weighted proportionally or inversely proportionally to the transmission quality value ($Q_1$, $Q_2$, $Q_3$) of the transmission channel ($UL_1$, $UL_2$, $UL_3$) between the relevant base station (BS1, BS2, BS3) and the terminal (1).

4. Method according to one of Claims 1 to 3, **characterized in that** the transmission quality value ($Q_1$, $Q_2$, $Q_3$) is determined by means of a bit error rate and/or a frame error rate and/or a transmitting or receiving power, respectively.

5. Method according to one of Claims 1 to 4, **characterized in that** the transmission quality value ($Q_1$, $Q_2$, $Q_3$) is a measure of the transmission quality of an uplink channel ($UL_1$, $UL_2$, $UL_3$) from the terminal (1) to the relevant base station (BS1, BS2, BS3).

6. Method according to Claim 5, **characterized in that** the terminal, for determining the transmission quality value ($Q_1$, $Q_2$, $Q_3$) of the uplink channel ($UL_1$, $UL_2$, $UL_3$), determines a feedback error rate by checking the antenna weighting factor set by the relevant base station (BS1, BS2, BS3).

7. Method according to one of Claims 1 to 6, **characterized in that** the terminal (1) determines a transmission quality value ($Q_1$, $Q_2$, $Q_3$) of the uplink channel ($UL_1$, $UL_2$, $UL_3$) by means of transmission power request signals (LA1, LA2, LA3) transmitted by the relevant base station (BS1, BS2, BS3) to the terminal (1).

8. Method for operating a cellular radio network (N) in which a radio link between a mobile terminal (1) and the network (N) can exist simultaneously over a number of base stations (BS1, BS2, BS3) which in each case transmit in parallel via a number of transmission paths (DL1a, DL1b, DL2a, DL2b, DL3a, DL3b) from different antennas (A1a, A1b, A2a, A2b, A3a, A3b) to the terminal (1), the terminal (1) in each case determining the associated base stations (BS1, BS2, BS3) channel coefficients ($H_{B1}$, $H_{B2}$, $H_{B3}$) for the transmission paths (DL1a, DL1b, DL2a, DL2b, DL3a, DL3b) from the antennas (A1a, A1b, A2a, A2b, A3a, A3b) of the relevant base station (BS1, BS2, BS3) to the terminal (1) and determining by means of the channel coefficients ($H_{B1}$, $H_{B2}$, $H_{B3}$) an antenna weighting factor ($\underline{w}$) and conveying this to the base stations (BS1, BS2, BS3) and the base stations (BS1, BS2, BS3) setting an antenna weighting by means of the antenna weighting factor ($\underline{w}$), **characterized in that** the antenna weighting factor ($\underline{w}$) is determined in the terminal (1) in accordance with a method according to one of Claims 1 to 7.

9. Mobile terminal (1) for use in a method according to one of Claims 1 to 8, comprising a channel coefficient determining unit (2) for in each case determining for the associated base stations (BS1, BS2, BS3) channel coefficients ($H_{B1}$, $H_{B2}$, $H_{B3}$) for the transmission paths (DL1a, DL1b, DL2a, DL2b, DL3a, DL3b) from the antennas (A1a, A1b, A2a, A2b, A3a, A3b) of the relevant base station (BS1, BS2, BS3) to the terminal (1), and comprising an antenna weighting factor determining unit (3) for determining by means of the channel coefficients ($H_{B1}$, $H_{B2}$, $H_{B3}$) an antenna weighting factor ($\underline{w}$) and conveying it to the base stations (BS1, BS2, BS3), **characterized in that** the terminal has a transmission channel control unit (5) for determining for the individual base stations (BS1, BS2, BS3) in each case one transmission quality value ($Q_1$, $Q_2$, $Q_3$) of a transmission channel between the relevant base station (BS1, BS2, BS3) and a terminal (1), and **in that** the antenna weighting factor determining unit (3) is constructed in such a manner that, during the determination of the antenna weighting factor ($\underline{w}$) it takes into consideration the channel coefficients ($H_{B1}$, $H_{B2}$, $H_{B3}$) of the individual base stations (BS1, BS2, BS3) in each case prioritized in dependence on the transmission quality value ($Q_1$, $Q_2$, $Q_3$) determined of the transmission channel between the relevant base station (BS1, BS2, BS3) and the terminal (1).

10. Terminal according to Claim 9, **characterized in that** the terminal (1) has a prioritizing unit (4) which, by means of the transmission quality values ($Q_1$, $Q_2$, $Q_3$) for the individual base stations (BS1, BS2, BS3), determines weighting factors ($\alpha_1$, $\alpha_2$, $\alpha_3$) and **in that** these are utilized by the antenna weighting factor determining unit (3) in the calculation of the antenna weighting factor ($\underline{w}$).

**Revendications**

1. Procédé de détermination d'un facteur ( $\underline{w}$ ) de pondération d'antenne pour un réglage d'une pondération d'antenne dans des stations ( BS1, BS2, BS3 ) de base d'un réseau ( N ) téléphonique cellulaire, dans lequel une liaison radio entre un terminal ( 1 ) mobile et le réseau ( N ) peut être constituée simultanément sur plusieurs stations ( BS1, BS2, BS3 ) de base, qui émettent respectivement en parallèle sur plusieurs trajets ( DL1a, DL1b, DL2a, DL2b, DL3a, DL3b ) de transmission allant vers le terminal à partir d'antennes ( A1a, A1b, A2a, A3a, A3b ), dans lequel le terminal ( 1 ) détermine, pour les stations ( BS1, BS2, BS3 ) de base associées respectivement aux coefficients ( $H_{B1}$, $H_{B2}$, $H_{B3}$ ) de canal des stations pour les trajets ( DL1a, DL1b, DL2a, DL2b, DL3a, DL3b ) de transmission allant des antennes ( Ala, A1b, A2a, A3a, A3b ), des stations ( BS1, BS2, BS3 ) concernées au terminal ( 1 ), et détermine au moyen des coefficients ( $H_{B1}$, $H_{B2}$, $H_{B3}$ ) de canal un facteur ( $\underline{w}$ ) de pondération d'antenne et le transmet aux stations ( BS1, BS2, BS3 ) de base, **caractérisé en ce que** l'on détermine, pour les diverses stations ( BS1, BS2, BS3 ) de base, respectivement une valeur ( $Q_1$, $Q_2$, $Q_3$ ) de la qualité de transmission d' un canal de transmission entre la station ( BS1, BS2, BS3 ) de base concernée et le terminal ( 1 ), et, lors de la détermination du facteur ( $\underline{w}$ ) de pondération d'antenne, les coefficients ( $H_{B1}$, $H_{B2}$, $H_{B3}$ ) de canal des diverses stations ( BS1, BS2, BS3 ) de base sont prises en compte avec priorité, respectivement en fonction de la valeur ( $Q_1$, $Q_2$, $Q_3$ ) de la qualité de transmission déterminée entre la station ( BS1, BS2, BS3 ) de base concernée et le terminal ( 1 ).

2. Procédé suivant la revendication 1, **caractérisé en ce que** l'on effectue la mise en priorité, de manière à ce que, lors de la détermination du facteur ( $\underline{w}$ ) de pondération d'antenne, seuls sont pris en compte les coefficients ( $H_{B1}$,

H$_{B2}$, H$_{B3}$ ) de canal des stations ( BS1, BS2, BS3 ) de base, dans lesquels la valeur ( Q$_1$, Q$_2$, Q$_3$ ) de la qualité de transmission est inférieure ou est supérieure à une valeur limite déterminée.

**3.** Procédé suivant la revendication 1, **caractérisé en ce que**, lors de la fixation du facteur ( w ) de pondération d'antenne, les coefficients ( H$_{B1}$, H$_{B2}$, H$_{B3}$ ) de canal des stations ( BS1, BS2, BS3 ) de base sont pondérés proportionnellement ou inversement proportionnellement à la valeur ( Q$_1$, Q$_2$, Q$_3$ ) de la qualité de transmission du canal ( UL$_1$, UL$_2$, UL$_3$ ) de transmission entre la station ( BS1, BS2, BS3 ) de base concernée et le terminal ( 1 ).

**4.** Procédé suivant l'une des revendications 1 à 3, **caractérisé en ce que** la valeur ( Q$_1$, Q$_2$, Q$_3$ ) de la qualité de transmission est déterminée au moyen d'un taux d'erreur de bit et/ou d'un taux d'erreur de trame et/ou d'une puissance d'émission ou de réception.

**5.** Procédé suivant l'une des revendications 1 à 4, **caractérisé en ce que** la valeur ( Q$_1$, Q$_2$, Q$_3$ ) de la qualité de transmission est une mesure de la qualité de transmission d'un canal ( UL$_1$, UL$_2$, UL$_3$ ) montant, allant du terminal ( 1 ) à la station ( BS1, BS2, BS3 ) de base concernée.

**6.** Procédé suivant la revendication 5, **caractérisé en ce que** le terminal détermine, pour la détermination de la valeur ( Q$_1$, Q$_2$, Q$_3$ ) de la qualité de transmission du canal ( UL$_1$, UL$_2$, UL$_3$ ) montant, un taux d' erreur de réaction par un contrôle du facteur de pondération d'antenne réglé par la station ( BS1, BS2, BS3 ) de base concernée.

**7.** Procédé suivant l'une des revendications 1 à 6, **caractérisé en ce que** le terminal ( 1 ) détermine une valeur ( Q$_1$, Q$_2$, Q$_3$ ) de qualité de la transmission du canal ( UL$_1$, UL$_2$, UL$_3$ ) montant, au moyen de signaux ( LA1, LA2, LA3 ) de demande de puissance d'émission que la station ( BS1, BS2, BS3 ) de base concernée envoie au terminal ( 1 ).

**8.** Procédé pour faire fonctionner un réseau ( N ) radio cellulaire, dans lequel une liaison radio entre un terminal ( 1 ) mobile et le réseau ( N ) peut être constituée simultanément sur plusieurs stations ( BS1, BS2, BS3 ) de base, qui émettent respectivement en parallèle sur plusieurs trajets ( DL1a, DL1b, DL2a, DL2b, DL3a, DL3b ) de transmission allant vers le terminal à partir d'antennes ( A1a, A1b, A2a, A3a, A3b ),
dans lequel le terminal ( 1 ) détermine, pour les stations ( BS1, BS2, BS3 ) de base associées respectivement aux coefficients ( H$_{B1}$, H$_{B2}$, H$_{B3}$ ) de canal des stations pour les trajets ( DL1a, DL1b, DL2a, DL2b, DL3a, DL3b ) de transmission allant des antennes ( A1a, A1b, A2a, A3a, A3b ), des stations ( BS1, BS2, BS3 ) concernées au terminal ( 1 ), et détermine au moyen des coefficients ( H$_{B1}$, H$_{B2}$, H$_{B3}$ ) de canal un facteur ( w ) de pondération d'antenne et le transmet aux stations ( BS1, BS2, BS3 ) de base,
et les stations ( BS1, BS2, BS3 ) de base règlent une pondération d'antenne au moyen du facteur ( w ) de pondération d'antenne,
**caractérisé**
**en ce que** l'on effectue la détermination du facteur ( w ) de pondération d'antenne dans le terminal ( 1 ) par un procédé suivant l'une des revendications 1 à 7.

**9.** Terminal ( 1 ) mobile à utiliser dans un procédé suivant l'une des revendications 1 à 8,
comprenant une unité ( 2 ) de détermination de canal, pour déterminer pour les stations ( BS1, BS2, BS3 ) de base associée, respectivement des coefficients ( H$_{B1}$, H$_{B2}$, H$_{B3}$ ) de canal pour les trajets ( DL1a, DL1b, DL2a, DL2b, DL3a, DL3b ) de transmission allant des antennes ( A1a, A1b, A2a, A3a, A3b ) de la station ( BS1, BS2, BS3 ) de base concernée au terminal ( 1 ),
et comprenant une unité ( 3 ) de détermination du facteur de pondération d'antenne, pour déterminer un facteur ( w ) de pondération d' antenne au moyen des coefficients ( H$_{B1}$, H$_{B2}$, H$_{B3}$ ) de canal et le transmettre aux stations ( BS1, BS2, BS3 ) de base,
**caractérisé**
**en ce que** le terminal a une unité ( 5 ) de contrôle de canal de transmission, pour déterminer, pour les diverses stations ( BS1, BS2, BS3 ) de base, respectivement une valeur ( Q$_1$, Q$_2$, Q$_3$ ) de qualité de transmission d'un canal de transmission entre la station ( BS1, BS2, BS3 ) de base concernée et le terminal ( 1 ),
et **en ce que** l'unité ( 3 ) de détermination du facteur de pondération d'antenne est telle qu'elle prend en compte avec priorité, lors de la détermination du facteur ( w ) de pondération d' antenne, les coefficients (H$_{B1}$, H$_{B2}$, H$_{B3}$ ) de canal des diverses stations ( BS1, BS2, BS3 ) de base, respectivement en fonction de la valeur ( Q$_1$, Q$_2$, Q$_3$ ) de qualité de la transmission du canal de transmission, entre la station ( BS1, BS2, BS3 ) de base concernée et le terminal ( 1 ).

**10.** Terminal suivant la revendication 9, **caractérisé en ce que** le terminal ( 1 ) a une unité (4) de mise en priorité, qui, au moyen des valeurs ( $Q_1$, $Q_2$, $Q_3$ ) de qualité de la transmission, détermine pour les diverses stations ( BS1, BS2, BS3 ) de base des facteurs ( $\alpha_1$, $\alpha_1$ $\alpha_1$ ) de pondération et **en ce qu'** il est tiré parti de ceux-ci par l'unité ( 3 ) de détermination de facteur de pondération d'antenne lors du calcul du facteur ( $\underline{w}$ ) de pondération d'antenne.

FIG 1

## FIG 2

Labels in figure: DL1a, b; UL; DL2a, b; DL3a, b; 1; KS1, KS2, KS3; 6; W; $H_{B1}$, $H_{B2}$, $H_{B3}$; 3; SKS1, SKS2, SKS3, $LA_1$, $LA_2$, $LA_3$; 2; $\alpha_1$, $\alpha_2$, $\alpha_3$; $Q_1$, $Q_2$, $Q_3$; 4; 5

## FIG 3

| DPDCH | DPCCH | | DPDCH | DPCCH |
|---|---|---|---|---|
| Data1 | TPC | TFCI | Data2 | Pilot |

$LA_1$, $LA_2$, $LA_3$

SKS1, SKS2, SKS3